# EUROPEAN PATENT APPLICATION

(11) **EP 2 477 061 A2**
(43) Date of publication of application: **18.07.2012**
(21) Application number: 12150953.3
(22) Date of filing: 12.01.2012
(51) Int. Cl.: G02F 1/1335, G02B 3/00

(54) **Optical film for reducing color shift and liquid crystal display having the same**

(30) Priority: 13.01.2011 KR 20110003525
(71) Applicant: Samsung Corning Precision Materials Co., Ltd., Gyeongsangbuk-do Gumi-si, 730-735 (KR)
(72) Inventor: Park, Seong-Sik, 336-841 Asan-si ChungCheongNam-Do (KR); Park, Seung Won, 336-841 Asan-si ChungCheongNam-Do (KR)
(74) Representative: Gulde Hengelhaupt Ziebig & Schneider

(57) **Abstract**

An optical film for reducing color shift in an LCD is disposed in front of a liquid crystal panel of the LCD. The optical film includes a background layer, a plurality of engraved lens sections formed in the background layer such that the engraved lens sections are spaced apart from each other, and portions partially packed in the engraved lens sections. The partially packed portions contain a light dispersing material. The partially packed portions are implemented by mixing the light dispersing material into a base material. The refractive index of the light dispersing material is different from that of the base material.

## Description

### CROSS REFERENCE TO RELATED APPLICATION

The present application claims priority from Korean Patent Application Number 10-2011-0003525, filed on January 13, 2011, the entire contents of which application are incorporated herein for all purposes by this reference.

### BACKGROUND OF THE INVENTION

### Field of the Invention

The present invention relates to an optical film for reducing color shift and a liquid crystal display (LCD) having the same, and more particularly, to an optical film for reducing color shift, in which engraved lens sections and partially packed portions are provided to reduce color shift depending on the viewing angle, and an LCD having the same.

### Description of Related Art

In response to the emergence of the advanced information society, components and devices related to image displays have been significantly improved and rapidly disseminated. Among them, image display devices have been widely distributed for use in TVs, personal computer (PC) monitors, and the like. Moreover, attempts are underway to simultaneously increase the size and reduce the thickness of such display devices.

In general, a liquid crystal display (LCD) is one type of flat panel display, and displays images using liquid crystals. The LCD is widely used throughout industry since it has the advantages of light weight, low drive voltage, and low power consumption compared to other display devices.

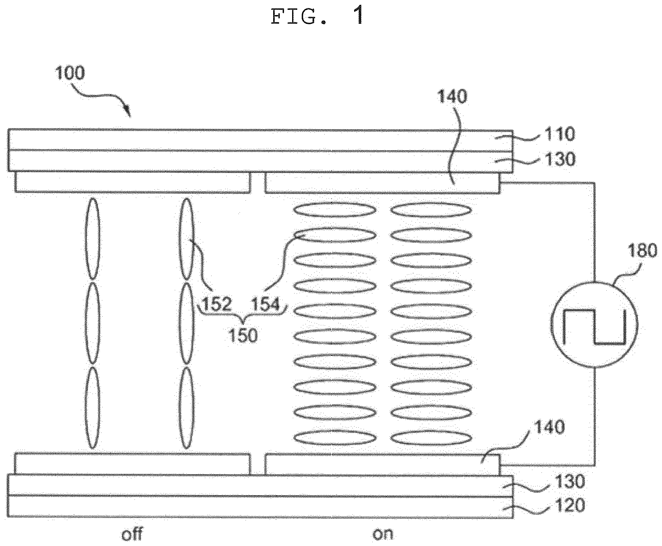

FIG. 1 is a conceptual view schematically showing the basic structure and operating principle of an LCD 100.

With reference by way of example to a conventional vertical alignment (VA) LCD, two polarizer films 110 and 120 are arranged such that their optical axes are oriented perpendicular to each other. Liquid crystal molecules 150 having birefringence characteristics are interposed and arranged between two transparent substrates 130, which are coated with transparent electrodes 140. When an electric field is applied from a power supply unit 180, the liquid crystal molecules move and are aligned perpendicular to the electric field.

Light emitted from a backlight unit is linearly polarized after passing through the first polarizer film 120. As shown in the left of FIG. 1, the liquid crystal molecules remain perpendicular to the substrates when no power is applied. As a result, light that is in a linearly polarized state is blocked by the second polarizer film 110, the optical axis of which is perpendicular to that of the first polarizer film 120.

In the meantime, as shown in the right of FIG. 1, when power is on, the electric field causes the liquid crystal molecules to become horizontally aligned such that they are parallel to the substrates, between the two orthogonal polarizer films 110 and 120. Thus, the linearly polarized light from the first polarizer film is converted into another kind of linearly polarized light, the polarization of which is rotated by 90°, circularly polarized light, or elliptically polarized light while passing through the liquid crystal molecules before it reaches the second polarizer film. The converted light is then able to pass through the second polarizer film. It is possible to gradually change the orientation of the liquid crystal from the vertical orientation to the horizontal orientation by adjusting the intensity of the electric field, thereby allowing control of the intensity of light emission.

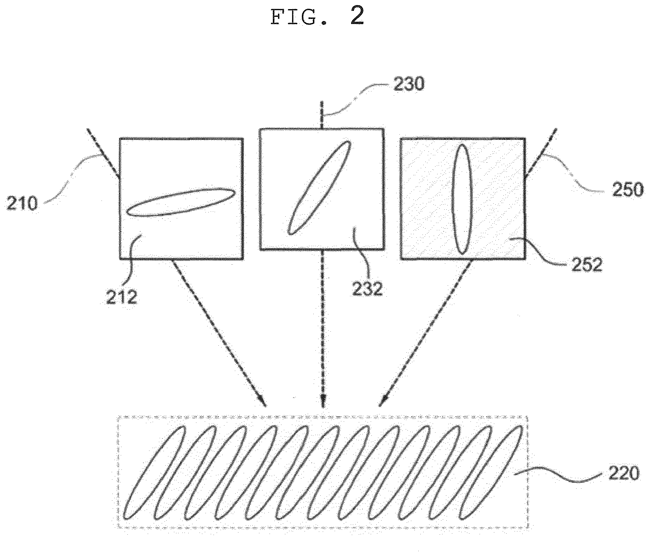

FIG. 2 is a conceptual view showing the orientation and optical transmittance of liquid crystals depending on the viewing angle.

When liquid crystal molecules are aligned in a predetermined direction within a pixel 220, the orientation of the liquid crystal molecules varies depending on the viewing angle.

When viewed from the front left (210), the liquid crystal molecules look as if they are substantially aligned along the horizontal orientation 212, and the screen is relatively bright. When viewed from the front along the line 230, the liquid crystal molecules are seen to be aligned along the orientation 232, which is the same as the orientation inside the pixel 220. In addition, when viewed from the front left (250), the liquid crystal molecules look as if they are substantially aligned along the vertical orientation 252, and the screen is somewhat darker.

Accordingly, the viewing angle of the LCD is greatly limited compared to other displays, which intrinsically emit light, since the intensity and color of light of the LCD varies depending on changes in the viewing angle. A large amount of research has been carried out with the aim of increasing the viewing angle.

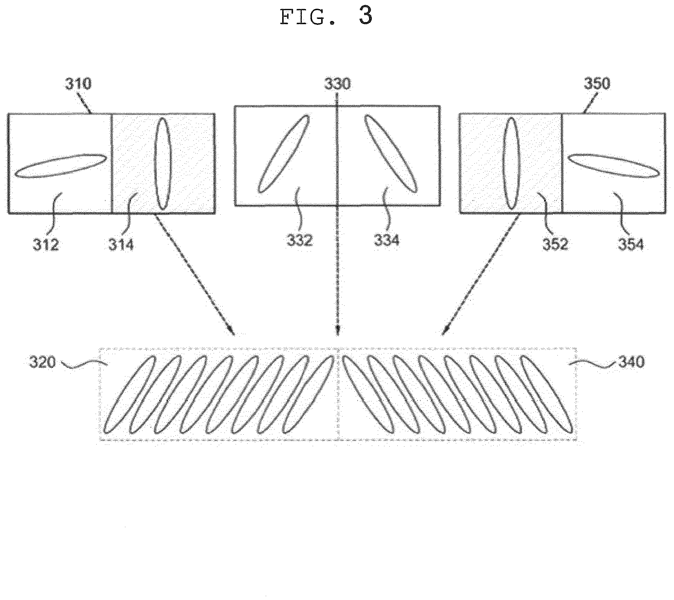

FIG. 3 is a conceptual view showing a conventional attempt to reduce variation in the contrast ratio and color shift depending on the viewing angle.

Referring to FIG. 3, a pixel is divided into two pixel parts, that is, first and second pixel parts 320 and 340, in which the orientations of liquid crystals are symmetrical to each other. Either the liquid crystals oriented as shown in the first pixel part 320 or the liquid crystals oriented as shown in the second pixel part 340 can be seen, depending on the viewing direction of a viewer. The intensity of light reaching the viewer is the total intensity of light of the two pixel parts.

When viewed from the front left (310), liquid crystal molecules in the first pixel part 320 look as if they are aligned along the horizontal orientation 312, and liquid crystal molecules in the second pixel part 320 look as if they are aligned along the vertical orientation 314. Thus, the first pixel part 320 makes the screen look bright. Likewise, when viewed from the front right (350), the liquid crystal molecules in the first pixel part 320 look as if they are aligned along the vertical orientation 352, and the liquid crystal molecules in the second pixel part 340 look as if they are aligned along the horizontal orientation 354. Then, the second pixel part 340 can make the screen look bright. In addition, when viewed from the front, the liquid crystal molecules are seen to be aligned along the orientations 332 and 334, which are the same as the orientations inside the pixel parts 320 and 340. Accordingly, the brightness of the screen observed by the viewer remains the same or similar, and is symmetrical about the vertical center line of the screen, even when the viewing angle changes. This, as a result, makes it possible to reduce variation in the contrast ratio and color shift depending on the viewing angle.

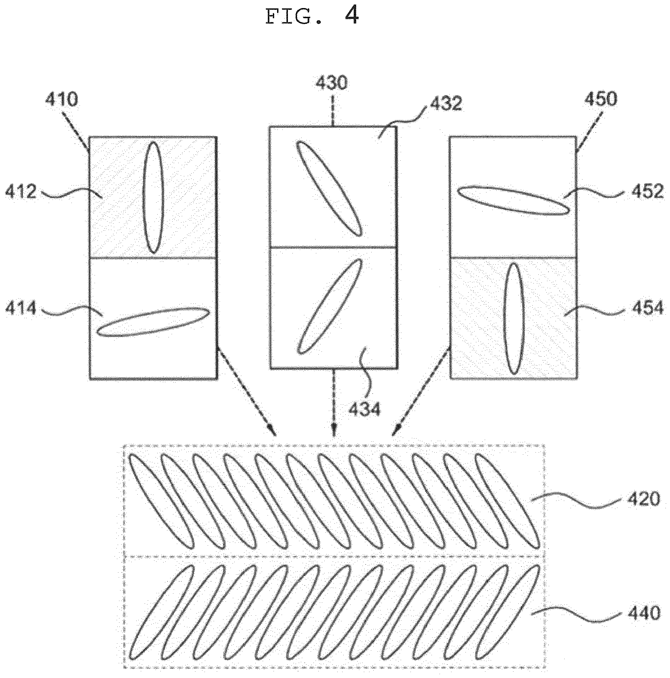

FIG. 4 is a conceptual view showing another conventional approach for reducing variation in the contrast ratio and color shift depending on to the viewing angle.

Referring to FIG. 4, an optical film 420 having birefringence characteristics is added. The birefringence characteristics of the optical film 420 are the same as those of liquid crystal molecules inside a pixel 440 of an LCD panel, and are symmetrical with the orientation of the liquid crystal molecules. Due to the orientation of the liquid crystal molecules inside the pixel 440 and the birefringence characteristics of the optical film, the intensity of light reaching the viewer is the total intensity of light from the optical film 420 and the pixel 440.

Specifically, when viewed from the front left (410), the liquid crystal molecules inside the pixel 440 look as if they are aligned along the horizontal orientation 414, and the imaginary liquid crystals produced by the optical film 420 look as if they are aligned along the vertical orientation 412. The resultant intensity of light is the total intensity of light from the optical film 420 and the pixel 440. Likewise, when viewed from the front right (450), the liquid crystal molecules inside the pixel 440 look as if they are aligned along the vertical orientation 454 and the imaginary liquid crystals produced by the optical film 420 look as if they are aligned along the horizontal orientation 452. The resultant intensity of light is the total intensity of light from the optical film 420 and the pixel 440. In addition, when viewed from the front, the liquid crystal molecules are seen to be aligned along the orientations 434 and 432, which are the same as the orientation inside the pixel 440 and the double-refracted orientation of the optical film 420, respectively.

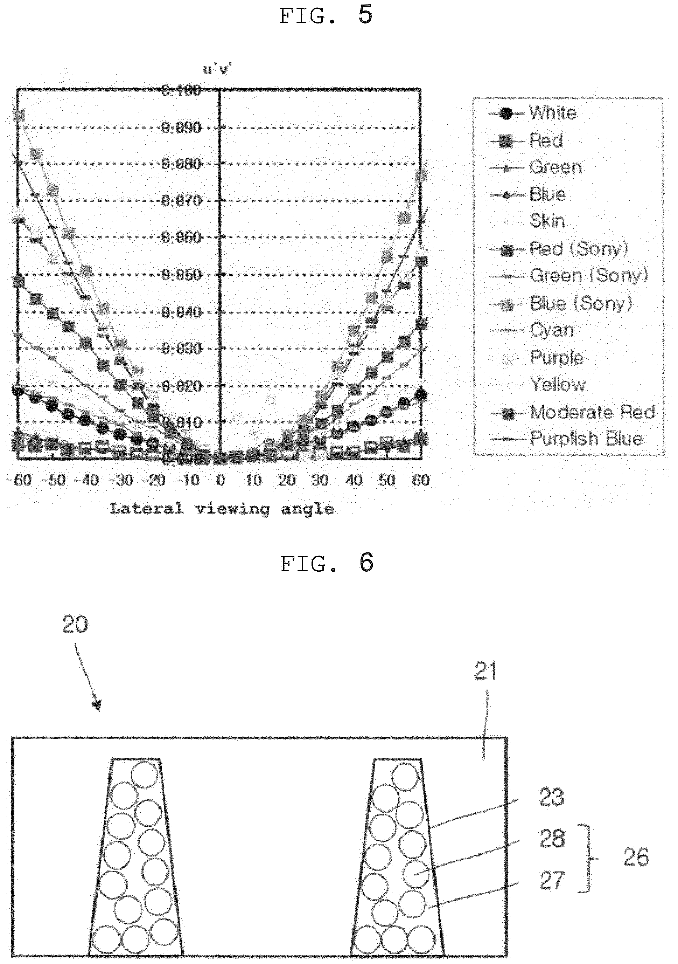

However, even if the approaches described above are applied, there remains the problem shown in FIG. 5. That is, color shift still occurs depending on the viewing angle, and the color changes when the viewing angle increases.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide an optical film for reducing color shift that can reduce color shift in response to an increase in the viewing angle and an LCD having the same.

Also provided are an optical film for reducing color shift that can prevent ghosts while reducing color shift and an LCD having the same.

In an aspect of the present invention, the optical film for reducing color shift in an LCD is disposed in front of a liquid crystal panel of the LCD. The optical film includes a background layer, a plurality of engraved lens sections formed in the background layer such that the engraved lens sections are spaced apart from each other, and portions partially packed in the engraved lens sections. The partially packed portions contain a light dispersing material.

In an embodiment, the partially packed portions may be implemented by mixing the light dispersing material into a base material.

In an embodiment, the refractive index of the light dispersing material may be different from that of the base material.

In the optical film for reducing color shift and the LCD (TN LCD, VA LCD, IPS LCD, etc.) having the same according to embodiments of the present invention, ghosting is prevented while color shift in response to an increase in the viewing angle is reduced.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a conceptual view schematically showing the basic structure and operating principle of an LCD;

FIG. 2 is a conceptual view showing the orientation and optical transmittance of liquid crystals depending on the viewing angle;

FIG. 3 is a conceptual view showing a conventional attempt to reduce variation in the contrast ratio and color shift depending on the viewing angle;

FIG. 4 is a conceptual view showing another conventional attempt to reduce variation in the contrast ratio and color shift depending on the viewing angle;

FIG. 5 is a graph showing color shift depending on the viewing angle for an LCD on which an optical film is not mounted;

FIG. 6 is a cross-sectional view showing an optical film for reducing color shift according to a first comparative example;

FIG. 7 to FIG. 17 are views explaining an optical film for reducing color shift according to a second comparative example; and

FIG. 18 is a view schematically showing an optical film for reducing color shift according to an exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments thereof, it is to be understood that the present description is not intended to limit the invention to those exemplary embodiments. On the contrary, the invention is intended to cover not only the exemplary embodiments, but also various alternatives, modifications, equivalents and other embodiments that may be included within the spirit and scope of the invention as defined by the appended claims.

### Comparative examples

A description will be given below of a first comparative example.

FIG. 6 is a cross-sectional view showing an optical film for reducing color shift according to a first comparative example.

FIG. 6 shows an optical film for reducing color shift, disclosed in Korean Patent Application No. 10-2009-0052883, which was previously filed by the assignee.

As shown in FIG. 6, the optical film 20 for reducing color shift includes a background layer 21, engraved lens sections 23 and completely packed portions 26. The completely packed portions 26 are implemented by mixing a light-diffusing substance 28 into a base material 27 made of resin.

A description will be given below of a second comparative example.

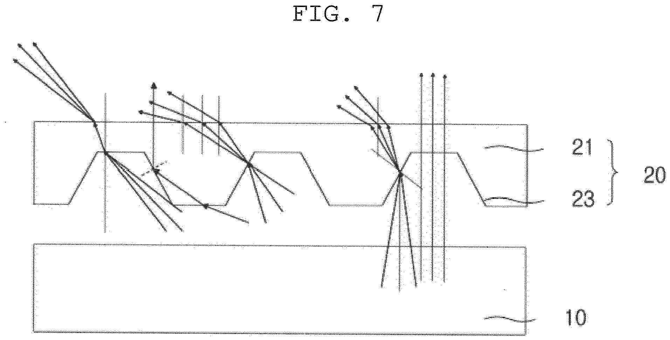

FIG. 7 to FIG. 17 are views explaining an optical film for reducing color shift according to a second comparative example.

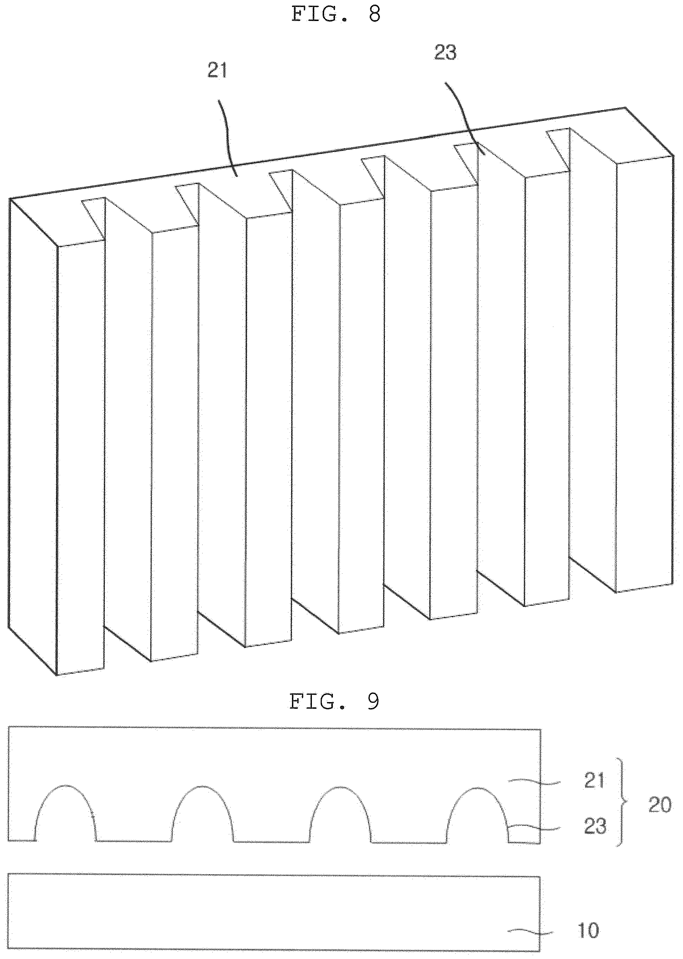

FIG. 7 and FIG. 8 show lens sections of the optical film according to the second comparative example.

The optical film is typically disposed in front of a display panel 10.

As shown in the figures, the optical film 20 includes a background layer 21 and lens sections 23.

The background layer 21 is formed as a layer of light-transmitting material. The background layer 21 may be made of transparent polymer resin, in particular, ultraviolet (UV) curing transparent resin.

The lens sections 23 are formed by engraving the background layer 21 to a predetermined depth. The lens sections 23 reduce color shift by refracting light that is incident thereon. The lens sections 23 can reduce the color change that occurs in response to an increase in the viewing angle using a color mixing effect. It is possible to allow more of the light that is emitted in the direction perpendicular to the plane of the display panel to pass through by reducing the width of the lens sections such that it is smaller than the spacing between the lens sections.

The lens sections 23 serve to change the direction of the portion of light that is emitted perpendicular to the plane of the display panel, such that it is not perpendicular thereto, and to change the direction of the portion of light that is not originally emitted perpendicular thereto, such that it is emitted perpendicular thereto. That is, the lens sections can cause color mixing by changing the direction of light depending on the viewing angle, thereby reducing color shift.

The lens sections 23 may have a pattern selected from among, but not limited to, stripes having a polygonal cross-section, waves having a polygonal cross-section, a matrix having a polygonal cross-section, a honeycomb having a polygonal cross-section, dots having a polygonal cross-section, stripes having a semicircular cross-section, waves having a semicircular cross-section, a matrix having a semicircular cross-section, a honeycomb having a semicircular cross-section, dots having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, stripes having a semi-oval cross-section, waves having a semi-oval cross-section, a matrix having a semi-oval cross-section, a honeycomb having a semi-oval cross-section, and dots having a semi-oval cross-section. The lens sections are not limited to the above-described shapes, but may have a variety of other shapes.

Here, the term "polygonal cross-section" may include, but is not limited to, triangular, trapezoidal and quadrangular cross-sections. In addition, the term "semi-oval cross-section" may include curved profiles other than an arc of a circle and an arc of an ellipse. Further, the terms "semicircular cross-section," "semi-elliptical cross-section," and "semi-oval cross-section" are not limited to the shapes that are obtained by dividing circular, elliptical, or oval shapes precisely into two sections, but include shapes in which part of the outline of the cross-section of the lens sections includes an arc, an elliptical arc, or a parabola. That is, the "semi-elliptical cross-section" may have a shape that has two elliptical arc lateral sides and a linear top side (or top side). A bilaterally symmetrical cross-section is preferable. It may be preferable that an outline of a cross-section includes a curve having a larger curvature than a straight line.

It is preferred that the lens sections 23 be periodically formed in one surface of the background layer 21, as shown in FIG. 8. In addition, the pattern constituted of stripes may also include a variety of patterns, such as a horizontal stripe pattern, a vertical stripe pattern, and the like. The horizontal stripe pattern is effective in compensating for vertical viewing angles. The vertical stripe pattern, as shown in FIG. 8, is effective in compensating for horizontal viewing angles.

In order to prevent a moiré phenomenon, the lens sections 23 may be formed to have a predetermined bias angle with respect to the edge of the background layer 21. For example, in the stripe pattern, the stripes may have a predetermined angle of inclination with respect to the horizontal or vertical direction.

The lens sections 23 may be formed in the surface of that faces the viewer, or on the surface that faces the display panel. The lens sections may also be formed in both surfaces of the background layer 21.

FIG. 9 is a cross-sectional view showing lens sections according to another comparative example.

As shown in FIG. 9, the lens sections may have a semi-elliptical cross-section.

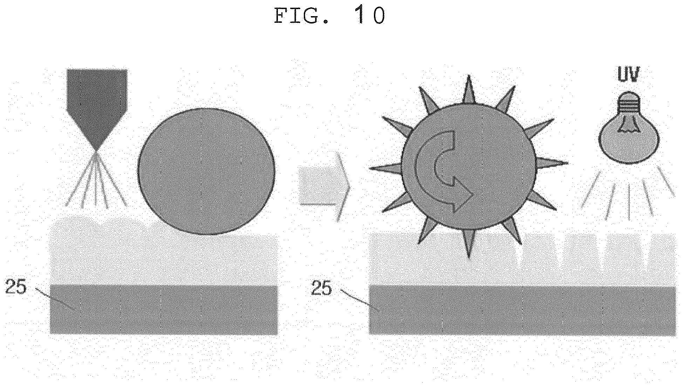

FIG. 10 is a view showing a method of manufacturing an optical film according to a further comparative example.

The optical film for reducing color shift may have a backing 25, which supports the background layer 21

The backing 25 is, preferably, a transparent resin film or a glass substrate that is UV transparent. Available examples of material for the backing may include, but are not limited to, polyethylene terephthalate (PET), polycarbonate (PC), polyvinyl chloride (PVC) and triacetate cellulose (TAC).

A method of preparing the lens sections 23 includes the step of applying a UV-curable resin on one surface of the backing 25, and the step of forming engraved recesses in the UV-curable resin using a forming roll that has a pattern that is the reverse of that of the lens sections on the surface thereof while radiating UV rays onto the UV-curable resin. Afterwards, the preparation of the background layer 21 having the lens sections 23 is finalized by radiating UV rays onto the UV-curable resin.

However, the optical film for reducing color shift of comparative examples is not limited thereto, but the recesses of the background layer may be formed using a variety of methods, such as thermal pressing, which uses thermoplastic resin, injection molding, in which thermoplastic resin or thermosetting resin is injected, or the like.

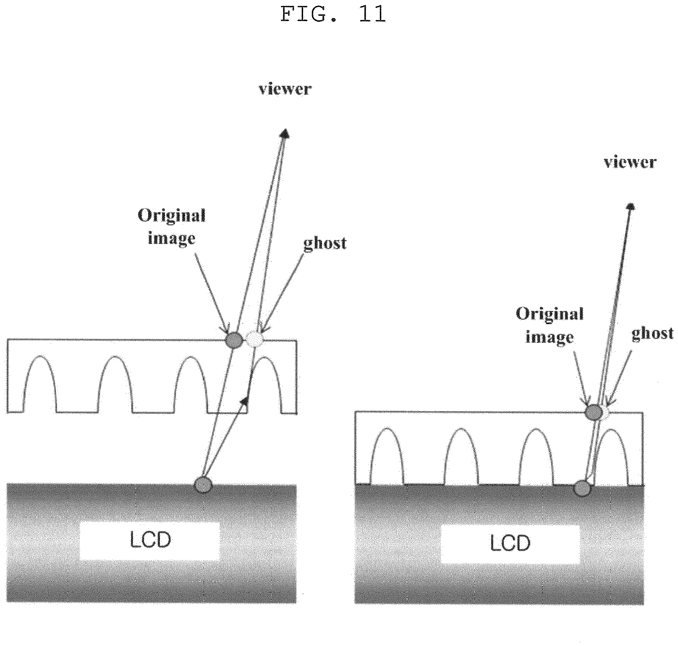

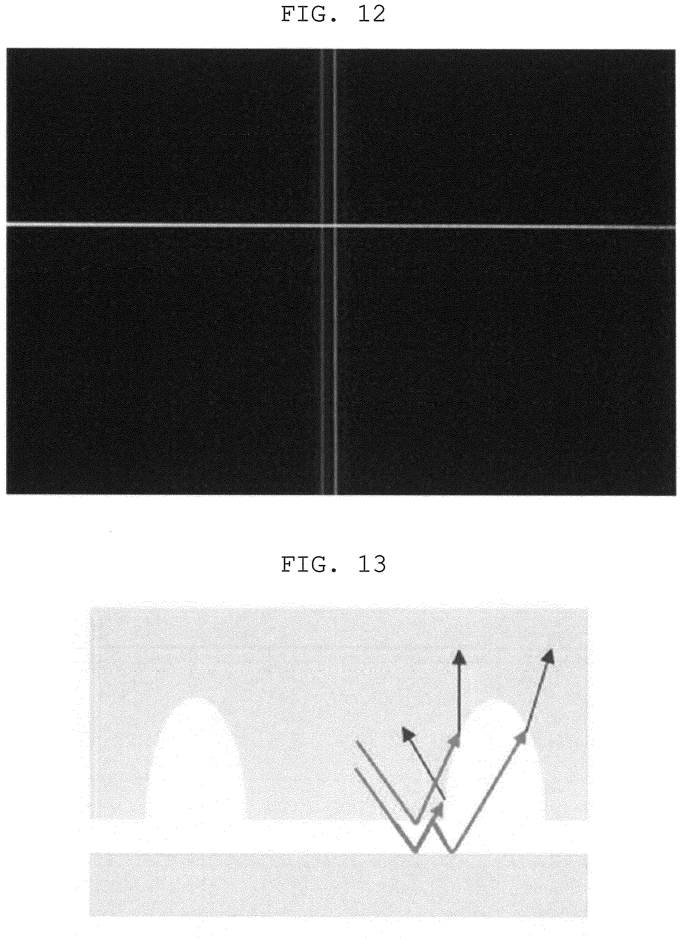

FIG. 11 and FIG. 13 are views showing that ghosts and hazing occur when the optical film for reducing color shift is spaced apart from the display panel.

When the optical film for reducing color shift is mounted in front of the display panel, spacing the optical film farther apart from the display panel makes the ghost look more distinct, as shown in FIG. 11. FIG. 12 is a view showing that ghosts occur when the optical film for reducing color shift is spaced apart from the display panel. The ghost distorts the image on the display panel. Therefore, a solution that can prevent ghosts while reducing color shift is required.

In addition, when the optical film for reducing color shift is provided such that it is spaced apart from the display panel, not only the foregoing problem of ghosts, but also the problem of haze occurs, as shown in FIG. 13, since the lens sections diffuse light reflected from the display panel and the flat surfaces between the lens sections. That is, light incident onto the optical film and the display panel is reflected, one or multiple times, from the interface between the optical film and the air (i.e. the air between the optical film and the display panel) and from the interface between the air and the display panel and then is incident onto the lens sections. The lens sections diffuse the incident light, which causes hazing. This phenomenon reduces bright-room contrast ratio (BRCR), thereby reducing the visibility of the display device. Therefore, a solution that can prevent ghosts and hazing from occurring in the optical film for reducing color shift is required.

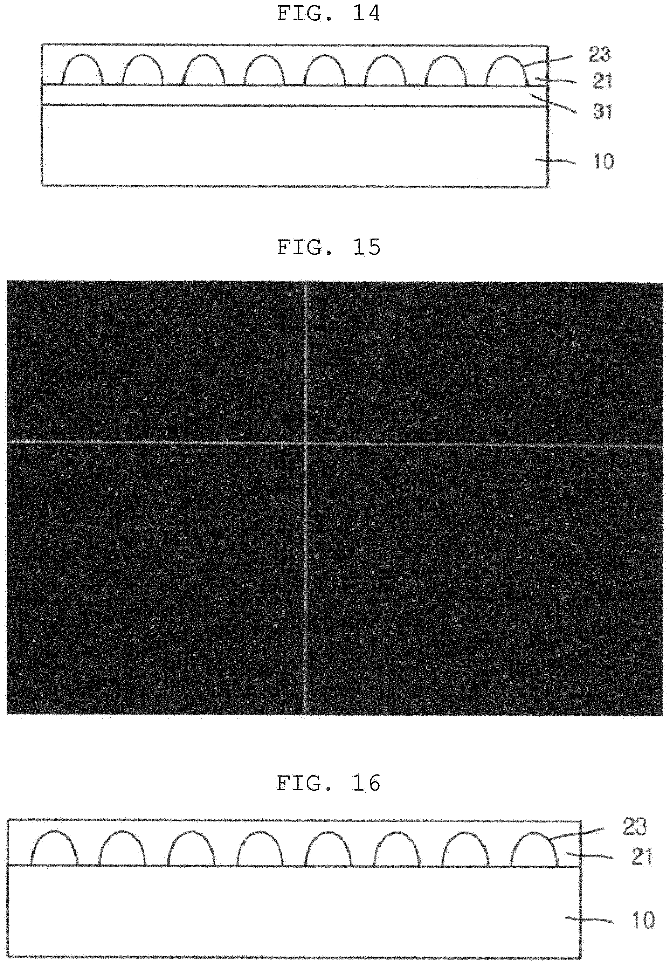

FIG. 14 to FIG. 16 are views showing a solution to remove ghosts and hazing in the optical film for reducing color shift. FIG. 14 schematically shows a display device according to another comparative example, FIG. 15 shows that ghosts are removed from the display device shown in FIG. 14, and FIG. 16 schematically shows a display device according to a further comparative example.

It is possible to remove ghosts and hazing by bringing the optical film into close contact with the display panel. For example, it is possible to prevent ghosts and hazing and improve transmittance by attaching the optical film for reducing color shift to the display panel by means of an adhesive, as shown in FIG. 14, or by forming a background layer from a material having a self-adhesive property and then directly attaching the background layer to the display panel, as shown in FIG. 16. In addition, it is also possible to simply bring the optical film into close contact with the display panel without adhering it thereto such that no air gap is interposed between the optical film and the display panel. When the optical film is in close contact with the display panel, it is difficult to distinguish the ghost from the original image because the gap between the ghost and the original image is very small, as will be described below.

When ghosts are observed, it was found that lens sections having a semi-elliptical cross-section can most effectively prevent ghosting. It is also preferable that the lens sections be directed toward the display panel instead of toward the viewer, in terms of reducing hazing. (This is the same when the optical film for reducing color shift is spaced apart from the display panel.)

Table 1 below presents the results obtained by measuring hazing in a display device in which the optical film for reducing color shift is spaced apart from the display panel, and in the display device shown in FIG. 14.

**Table 1**

| Sample | Luminance measured at a viewing angle of 60° |
|---|---|
| Black panel | 1.73 nit |
| Display panel/Air/Film having lens sections with semi-elliptical cross-section | 12.27 nit |
| Display panel/PSA/Film having lens sections with semi-elliptical cross-section | 2.58 nit |
| Display panel/Air/PET film | 3.87 nit |

Measurement was carried out using illuminant D65, having 240 lux as an external light source by attaching the samples to black substrates and then measuring the luminance of reflected light at a horizontal viewing angle of 60°. Since the external light source exists at a place higher than the samples, specular reflection could be observed from below the samples, and irregular reflection could be observed from all directions. Therefore, the reflection hazing caused by external light was measured by detecting irregularly reflected light at a horizontal viewing angle of 60°, rather than from below the samples.

When the optical film for reducing color shift was adhered to the display panel, the reflection haze was measured to be 2.58nit, which is very small compared to when the optical film was spaced apart from the display panel to thus form an air gap therebetween. It can be appreciated that the reflection hazing was significantly reduced even in comparison with the case in which the simple PET film without the lens sections is used.

The self-adhesive background layer may be made of UV-curable transparent elastomer such that it can be easily attached directly to the display panel. Available materials for the background layer may include, but are not limited to, acrylic elastomer, silicone-based elastomer (polydimethylsiloxane: PDMS), urethane-based elastomer, polyvinyl butyral (PMB) elastomer, ethylene vinyl acetate (EVA)-based elastomer, polyvinyl ether (PVE)-based elastomer, saturated amorphous polyester-based elastomer, melamine resin-based elastomer, and the like.

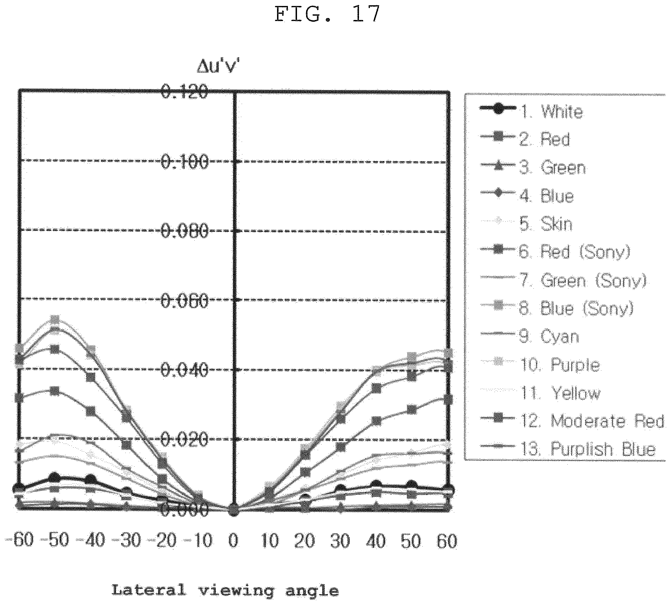

FIG. 17 is a graph showing the result obtained by attaching the self-adhesive optical film for reducing color shift (in which lens sections have a semi-elliptical cross-section with a width of 30µm, a depth of 60µm and a pitch of 83µm) shown in FIG. 16 to the display panel in an S-PVA mode LCD TV, which has the color shift shown in FIG. 5, and then measuring the rate of color shift reduction.

The color shift reduction rate in FIG. 17 was 52%.

### Embodiments of the Invention

The above-described optical film according to the first comparative example is relatively limited in its ability to reduce color shift. In contrast, the optical film according to the second comparative example has the problems in that, when the depth of the lens sections is increased, the occurrence of ghosts increases although the effect of reducing color shift is great, and when the depth of the lens section is decreased, the effect of reducing color shift is decreased although the occurrence of ghosts decreases.

Therefore, a solution that can minimize the occurrence of ghosts while increasing the effect of reducing color shift is required. The present invention proves that such a requirement can be satisfied by incorporating the above- described first and second comparative examples together.

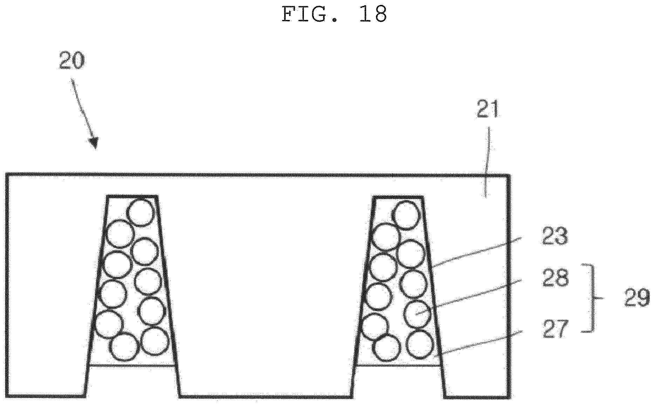

FIG. 18 is a view schematically showing an optical film for reducing color shift according to an exemplary embodiment of the invention.

The optical film 20 is disposed in front of an LCD panel.

As shown in FIG. 18, the optical film 20 for reducing color shift according to an exemplary embodiment of the invention includes a background layer 21, engraved lens sections 23 and partially packed portions 29.

The background layer is formed as a layer.

The engraved lens sections are formed in the background layer. Here, a plurality of engraved lens sections is formed such that they are spaced apart from each other. This means that the engraved lens sections, which refract light that passes through the cross-section of the background layer, are spaced apart from each other, and that a flat surface of the background layer is present between adjacent engraved lens sections. Accordingly, the lens sections having a predetermined pattern, e.g., a matrix having a semi-elliptical cross-section, look like a single lens structure having a matrix pattern when they are viewed from the viewer side, whereas the lens sections look to be spaced apart from each other when they are viewed on the cross-section of the optical film. The lens sections having this structure therefore form lens sections of the present invention.

The partially packed portions 29 are partially packed in the engraved lens sections 23. The partially packed portions contain a light dispersing material. It is preferred that the partially packed portions be implemented by mixing the light dispersing material 28 into a base material 27 made of polymer resin. The base material may be made of UV-curable resin or thermally curable resin, but the present invention is not limited thereto. It is preferred that the light dispersing material be light dispersing particles such as light dispersing beads.

The light dispersing material and the base material have different refractive indexes. A greater difference between the refractive indexes is more preferable. In an exemplary embodiment, the light dispersing material may be formed as spherical particles that have a difference in the refractive index of 0.01 or more from that of the base material, and have an average diameter of 0.1µm or more, such that they can efficiently disperse light. In addition, it is preferred that the light dispersing material be white in order to efficiently disperse all wavelengths of light. However, the present invention is not limited thereto.

The diameter of the particles of the light dispersing material must be smaller than the width of the lens sections. If the diameter is greater than the width, it is difficult to pack the light dispersing material into the lens sections of the background layer. The light dispersing material may have two kinds of size and refractive index, and the optical characteristics of the light dispersing material may be properly controlled using the properties, refractive index, size, particle size distribution, and the like of the light dispersing material.

Examples of the light dispersing material may include at least one selected from among, but are not limited to, Polymethyl methacrylate (PMMA), vinyl chloride, acrylic resin, poly carbonate (PC)-based resin, polyethylene terephthalate (PET)-based resin, polyethylene (PE)-based resin, polystyrene (PS)-based resin, polypropylene (PP)-based resin, polyimide (PI)-based resin, glass and silica TiO₂.

The refractive index of the partially packed portions may be the same as or different from that of the background layer. If the refractive indexes are different, it is preferred that the refractive index of the partially packed portions be greater than that of the background layer.

A method of preparing the partially packed portions includes the step of applying a UV-curable resin on one surface of the backing 25, and the step of forming engraved recesses in the UV-curable resin using a forming roll that has a pattern that is the reverse of that of the lens sections on the surface thereof while radiating UV rays onto the UV-curable resin. Afterwards, the preparation of the background layer 21 having the lens sections 23 is finalized by radiating UV rays onto the UV-curable resin. However, the present invention is not limited thereto, but the lens sections may be formed using a variety of methods, such as thermal pressing, which uses thermoplastic resin, injection molding, in which thermoplastic resin or thermosetting resin is injected, or the like.

Afterwards, UV-curable resin into which the light-dispersing material is mixed is supplied to the lens sections, is partially packed into the lens sections using a squeegee made of rubber and a blade made of metal, and is cured by radiating UV rays thereon, thereby completing the partially packed portions.

According to this embodiment of the present invention, the partially packed portions of the recesses, which contain the light dispersing material, and the unpacked portions of the recesses, which act as the engraved lens sections, serve to increase the effect of reducing color shift and advantageously reduce the occurrence of ghosts, since the depth of the unpacked portions is not great.

Table 2 below presents the result obtained by comparing the ratio of color shift reduction of the case in which the lens sections are partially packed with that of the case in which the lens sections are completely packed.

A base material having a refractive index of 1.5 and 1wt% of light dispersing beads having a refractive index of 1.59 and an average diameter of 6µm were packed in the lens sections, and then the color shift Δu'v' in response to an increase in the bilateral viewing angle was measured.

**Table 2**

| Sample | | Δu'v'(max) | Ratio of color shift reduction (%) |
|---|---|---|---|
| PS (n=1.59) | Completely packed | 0.077 | 16.3% |
| 6µm 1wt% | | | |
| | Partially packed | 0.054 | 41.3% |

As a result, as presented in Table 2, it can be appreciated that the sample to which the present invention was applied (partial packing) had a greater effect of reducing color shift.

The optical film for a display device of the present invention may be configured as a single film of the background layer in which the lens sections and partially packed portions are formed as described above, or as a multiple-layer optical film by layering a variety of functional films, such as a transparent substrate for protecting the panel, an anti-fog film an anti-reflection film, a polarizer film and a phase retardation film, on the background layer.

In this case, respective constitutional layers of the optical film of the present invention may be adhered or bonded using an adhesive or a bonding agent. Specific examples thereof may include, but are not limited to, acrylic adhesives, silicone-based adhesives, urethane-based adhesives, polyvinyl butyral (PMB) adhesives, ethylene vinyl acetate (EVA)-based adhesives, polyvinyl ether (PVE), saturated amorphous polyester, and melamine resins.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. An optical film for reducing color shift in a liquid crystal display, the optical film being disposed in front of a liquid crystal display panel of the liquid crystal display, and comprising:
a background layer;
a plurality of engraved lens sections formed in the background layer such that the engraved lens sections are spaced apart from each other; and
partially packed portions partially packed in the engraved lens sections,
wherein the partially packed portions comprise a light dispersing material.

2. The optical film of claim 1, wherein the partially packed portions further comprise a base material into which the light dispersing material is mixed.

3. The optical film of claim 2, wherein a refractive index of the light dispersing material is different from that of the base material.

4. The optical film of claim 2, wherein a refractive index of the light dispersing material is equal to that of the base material.

5. The optical film of claim 2, wherein a refractive index of the base material is different from that of the background layer.

6. The optical film of claim 5, a refractive index of the base material is greater than that of the background layer.

7. The optical film of claim 2, wherein the base material comprises polymer resin.

8. The optical film of claim 1, wherein the light dispersing material comprises light dispersing particles.

9. The optical film of claim 1, wherein the background layer is self-adhesive.

10. The optical film of claim 1, wherein the lens sections have a pattern selected from the group consisting of stripes having a polygonal cross-section, waves having a polygonal cross-section, a matrix having a polygonal cross-section, a honeycomb having a polygonal cross-section, dots having a polygonal cross-section, stripes having a semicircular cross-section, waves having a semicircular cross-section, a matrix having a semicircular cross-section, a honeycomb having a semicircular cross-section, dots having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, stripes having a semi-oval cross-section, waves having a semi-oval cross-section, a matrix having a semi-oval cross-section, a honeycomb having a semi-oval cross-section, and dots having a semi-oval cross-section.

11. A liquid crystal display comprising:
a liquid crystal display panel; and
an optical film for reducing color shift in the liquid crystal display, wherein the optical film is disposed in front of the display panel, and comprises:
- a background layer;
- a plurality of engraved lens sections formed in the background layer such that the engraved lens sections are spaced apart from each other; and
- partially packed portions partially packed in the engraved lens sections,
- wherein the partially packed portions comprise a light dispersing material.

12. The liquid crystal display of claim 11, wherein the lens sections of the optical film are formed on a rear surface of the background layer that faces the display panel.

13. The liquid crystal display of claim 11, wherein the optical film is in close contact with the display panel.
